(19) **Europäisches Patentamt**

**European Patent Office**

**Office européen des brevets**

(11) **EP 0 774 658 B1**

## (12) EUROPÄISCHE PATENTSCHRIFT

(45) Veröffentlichungstag und Bekanntmachung des Hinweises auf die Patenterteilung:
**08.10.2003 Patentblatt 2003/41**

(51) Int Cl.⁷: $G01N\ 21/47$, G01N 21/49, A61B 5/00

(21) Anmeldenummer: **96117582.5**

(22) Anmeldetag: **02.11.1996**

(54) **Verfahren und Vorrichtung zur Bestimmung von analytischen Daten über das Innere einer streuenden Matrix**

Method and apparatus for obtaining analytical data on the interior of a scattering medium

Procédé et dispositif de détermination de données analytiques concernant l'intérieur d'un milieu diffusant

(84) Benannte Vertragsstaaten:
**DE ES FR GB IT**

(30) Priorität: **18.11.1995 DE 19543020**

(43) Veröffentlichungstag der Anmeldung:
**21.05.1997 Patentblatt 1997/21**

(73) Patentinhaber: **Roche Diagnostics GmbH**
**68305 Mannheim (DE)**

(72) Erfinder:
- **Kohl, Matthias**
  **London, N10 3LY (GB)**
- **Cope, Mark**
  **Avon, BA2 6QB (GB)**
- **Essenpreis, Matthias**
  **82131 Gauting (DE)**

- **Boecker, Dirk**
  **69115 Heidelberg (DE)**

(74) Vertreter: **Pfeifer, Hans-Peter, Dr. et al**
**Patentanwälte**
**Dr. H.-P. Pfeifer Dr. P. Jany**
**Beiertheimer Allee 19**
**76137 Karlsruhe (DE)**

(56) Entgegenhaltungen:
**WO-A-94/10901**

- **APPLIED OPTICS, Bd. 34, Nr. 13, 1.Mai 1995, Seiten 2362-2366, XP000504845 LIHONG WANG ET AL: "USE OF A LASER BEAM WITH AN OBLIQUE ANGLE OF INCIDENCE TO MEASURE THE REDUCED SCATTERING COEFFICIENT OF A TURBID MEDIUM"**

**Beschreibung**

Die Erfindung betrifft eine Verfahren und eine Vorrichtung zur Bestimmung von analytischen Daten über das Innere einer streuenden Matrix, insbesondere einer biologischen Probe, mit Hilfe von Licht.

Der wichtigste Anwendungsfall der Erfindung ist die Untersuchung biologischer Proben, insbesondere des Gewebes eines lebenden Organismus. Biologische Proben sind meistens optisch heterogen, d.h. sie enthalten eine Vielzahl von Streuzentren, an denen eingestrahltes Licht gestreut wird. Dies gilt für menschliches oder tierisches Gewebe, insbesondere Hautgewebe oder subkutanes Fettgewebe, aber auch für flüssige biologische Proben, wie beispielsweise Blut, in dem die Blutkörperchen Streuzentren bilden oder auch für Milch, bei der die Streuzentren von emulgierten Fetttröpfchen gebildet werden. Daneben richtet sich die Erfindung generell auf streuende Matrices, in dem Sinne, daß es sich um dreidimensionale Gebilde mit einer so hohen Dichte an optischen Streuzentren handelt, daß eindringendes Licht in der Regel vielfach gestreut wird, bevor es die streuende Matrix wieder verläßt. Im wesentlichen geht es um streuende Matrices mit einer mittleren freien Weglänge des Lichts von weniger als 5 mm. Nichtbiologische streuende Matrices, die auf Basis der vorliegenden Erfindung untersucht werden können, sind beispielsweise Emulsionen und Dispersionen, wie sie für unterschiedliche Anwendungszwecke, beispielsweise für Lacke und Farben sowie für Oberflächenbeschichtungen von Kunststoffen benötigt werden.

Auch an Flüssigkeiten, die selbst keine Streuzentren enthalten, können analytische Daten mit Hilfe der vorliegenden Erfindung bestimmt werden, wenn man sie durch einen Behälter fließen läßt, in welchem sich lichtstreuende Partikel mit vorzugsweise bekannten Streueigenschaften befinden. In diesem Fall bildet der Inhalt des Behälters (Flüssigkeit mit Streuzentren) eine streuende Matrix im Sinne der Erfindung. Dieses Verfahren kann insbesondere in solchen Fällen sinnvoll sein, bei denen die gewünschten Analysedaten an der klaren Flüssigkeit mit anderen Methoden (beispielsweise spektroskopisch) nicht gut bestimmt werden können.

Die Erfindung richtet sich auf die Bestimmung von analytischen Daten, die aus der Wechselwirkung von eingestrahltem Licht mit der Matrix bestimmt werden können ("optische Analysedaten"). Dabei werden in einem "Detektionsschritt" des Verfahrens "Messungen" durchgeführt, bei denen jeweils Licht mit Hilfe von Einstrahlungsmitteln an einem Einstrahlungsort durch eine die Matrix begrenzende Grenzfläche eingestrahlt und dabei an einem Detektionsort in einem vorbestimmten Meßabstand von dem Einstrahlungsort durch die gleiche Grenzfläche (d.h. "in Reflexion") austretendes Licht mit Hilfe von Detektionsmitteln detektiert wird. Ein solcher Meßvorgang wird nachfolgend als Detektionsmessung, das eingestrahlte Licht als Primärlicht und das detektierte Licht als Sekundärlicht bezeichnet.

Bei solchen Detektionsmessungen wird eine meßbare physikalische Eigenschaft des Lichts bestimmt, die man als "quantifizierbaren Parameter" (englisch: quantifiable parameter) bezeichnen kann und die nachfolgend einfachheitshalber als "Meßgröße" bezeichnet wird. Die Meßgröße ist in den meisten Fällen die Intensität des Sekundärlichts, die vielfach in Abhängigkeit von der Licht-Wellenlänge gemessen wird. Daneben werden auch andere Meßgrößen, wie beispielsweise die Polarisationsrichtung und der Polarisationsgrad des Sekundärlichts (bei polarisiert eingestrahltem Primärlicht), sowie die Phasenlage des Sekundärlichts (bei intensitätsmoduliert eingestrahltem Primärlicht) zur Gewinnung von optischen Analysedaten verwendet.

Aus den Meßwerten der in dem Detektionsschritt durchgeführten Detektionsmessungen können in einem nachfolgenden Auswerteschritt mittels eines Auswertealgorithmus unterschiedliche analytische Daten ermittelt werden, die von der Wechselwirkung des Lichts mit der streuenden Matrix abhängig sind. Insbesondere geht es um Parameter, die die optischen Eigenschaften der streuenden Matrix quantitativ beschreiben, wie den Streukoeffizienten $\mu_s$, den Absorptionskoeffizienten $\mu_a$, den Anisotropiefaktor der Streuung g und den Brechungsindex n. Solche Parameter werden nachfolgend als "Lichttransportparameter" bezeichnet.

Bei der Untersuchung biologischer Proben steht die Bestimmung der Konzentration von in der Probe enthaltenen Substanzen, wie beispielsweise Wasser, Glucose, Bilirubin, Cholesterin, Triglyzeride, Harnstoff, Harnsäure, Oxyhämoglobin, Hämoglobin oder Cytochrom-Oxydase im Vordergrund. Die Konzentration derartiger Analyten wird in aller Regel invasiv, d.h. nach Entnahme einer Blutprobe aus dem lebenden Organismus bestimmt. Es besteht schon seit langem der Wunsch, diese invasive Analyse durch eine schmerzfreie, nicht-invasive Analyse zu ersetzen.

Dabei besteht ein enger Zusammenhang zwischen den Lichttransportparametern (insbesondere $\mu_a$ und $\mu_s$) und der chemischen Analyse von Substanzen. Letztere basiert in der Regel auf spektroskopischen Prinzipien, d.h. auf der Untersuchung der spektralen Abhängigkeit der optischen Absorption. Während dies in einer klaren Flüssigkeit ein seit langem etabliertes, problemloses Verfahren ist, besteht in biologischen Proben aufgrund der Vielfachstreuung des Lichts das Problem, daß die von dem Licht in der Probe zurückgelegte optische Weglänge unbekannt ist. Wenn es gelingt, durch ein geeignetes meßtechnisches Verfahren die optische Absorption getrennt von der Streuung zu erfassen (d.h. $\mu_a$ und $\mu_s$ zu trennen), ist dieses Problem gelöst und die bekannten spektroskopischen Prinzipien können für die Analyse zahlreicher Substanzen in biologischen Proben verwendet werden.

Optische Analysedaten streuender Matrices sind deswegen für ganz unterschiedliche Anwendungszwecke bedeutsam. Verfahren zur Bestimmung solcher Daten werden hier zusammenfassend als "optische Matrix-Analytik" bezeichnet. Die optische Matrix-Analytik umfaßt insbesondere die Untersuchung streuender Matrices hinsichtlich ihrer Lichttransportparameter und daraus ableitbarer analytischer Daten.

Zur getrennten Ermittlung von analytischen Daten, die einerseits das Streuverhalten und andererseits das Absorptionsverhalten von Licht in einem streuenden Medium beschreiben, wird diskutiert, $\mu_a$ und $\mu_s$ aus der Abhängigkeit I(d) der Intensität I des Sekundärlichts von dem Meßabstand d zu bestimmen. Als theoretische Grundlagen dienen dabei die Diffusionstheorie sowie numerischstatistische Verfahren (Monte Carlo-Rechnungen). Hierzu kann auf folgende Publikationen verwiesen werden:

M. Keijzer et al.: "Optical diffusion in layered media", App. Opt. 27, 1820-1824 (1988);

S.T. Flock et al.: "Monte Carlo modeling of light propagation in highly scattering tissues - I: Model predictions and comparison with diffusion theory", IEEE Trans. Biomed. Eng., 36, 1162-1168 (1989).

T.J. Farrell et al.: "A diffusion theory model of spatially resolved, steady-state diffuse reflectance for the noninvasive determination of tissue optical properties in vivo", Med. Phys., 19, 879-888 (1992);

Obwohl darin über eine gute Übereinstimmung von Meßwerten und theoretischen Berechnungen berichtet wird, haben diese Verfahren keine praktische Bedeutung, insbesondere für die Bestimmung von Analyten in biologischen Proben, erlangt.

Daneben sind vor allem in jüngerer Zeit sogenannte Frequenzdomänen-Meßverfahren diskutiert worden. Diese arbeiten mit hochfrequent moduliertem Licht und bedingen dadurch einen großen meßtechnischen Aufwand.

Der Erfindung liegt die Aufgabe zugrunde, die optische Matrix-Analytik, insbesondere hinsichtlich des erforderlichen meßtechnischen Aufwands zu verbessern.

Die Aufgabe wird bei einem Verfahren, bei welchem ein Detektionsschritt mit Detektionsmessungen und ein Auswerteschritt der beschriebenen Art durchgeführt werden, dadurch gelöst, daß in dem Detektionsschritt mindestens zwei Detektionsmessungen mit unterschiedlichen Reflexionsbedingungen an der Grenzfläche zwischen dem Einstrahlungsort und dem Detektionsort durchgeführt werden, bei denen jeweils ein Meßwert der Meßgröße bestimmt wird. Als Meßgröße kommt jeder der eingangs diskutierten quantifizierbaren Parameter des Lichts, also neben dessen Intensität insbesondere Polarisationsgrad, Polarisationsrichtung und Phasenlage in Betracht.

Im Rahmen der Erfindung wurde festgestellt, daß eine verbesserte optische Matrix-Analytik - insbesondere eine verbesserte Trennung der Einflüsse von Streuung und Absorption - möglich ist, wenn man das Verfahren so gestaltet, daß das Reflexionsverhalten an der Grenzfläche zwischen Matrix und Umgebung verändert und damit eine neue unabhängige und von außen einstellbare Variable eingeführt wird. Dabei kann das Reflexionsverhalten auf unterschiedliche Art und Weise beeinflußt werden. Entscheidend ist letztendlich nur, daß Photonen, die auf ihrem Weg von dem Einstrahlungsort zu dem Detektionsort an die Grenzfläche gelangen, bei den beiden Detektionsmessungen mit unterschiedlicher Wahrscheinlichkeit in die Matrix zurückreflektiert werden. Mit anderen Worten soll die Austrittswahrscheinlichkeit der Photonen bei den beiden Detektionsmessungen deutlich verschieden sein. Die durch die Grenzfläche (bei unveränderter Matrix) austretende Lichtintensität soll sich bei beiden Messungen deutlich (in der Regel um mindestens 10 %) unterscheiden.

Die Wellenlänge des Meßlichts kann in einem weiten Bereich zwischen dem UV und dem Infrarot (etwa zwischen 200 nm und 3 μm) gewählt werden. Der Begriff Licht im Sinne der Erfindung ist also nicht auf den sichtbaren Spektralbereich beschränkt.

Durch das erfindungsgemäße Meßverfahren werden unter anderem folgende Vorteile erreicht:

- Es ist ausreichend, nur die DC-Intensität des Sekundärlichts zu bestimmen. Hochfrequenzmessungen sind nicht erforderlich.

- In der Regel sind Relativmessungen der Intensität, also die Messung des Verhältnisses der Intensität des Sekundärlichts bei jeweils zwei Detektionsmessungen mit unterschiedlichem Reflexionsverhalten ausreichend.

- Die Einflüsse der optischen Absorption und der Streuung können getrennt werden.

- Die Abhängigkeit des gemessenen Signals einerseits von dem Streuverhalten und andererseits von dem Absorptionsverhalten der streuenden Matrix ist so stark unterschiedlich, daß es vielfach nicht einmal notwendig ist, aufwendige Auswerteverfahren zur Berechnung des Streu- und Absorptionskoeffizienten durchzuführen.

Insbesondere richtet sich die Erfindung auf folgende Teilaspekte der Matrix-Analytik:

- Bestimmung von Lichttransportparametern, insbesondere eines Absorptionsparameters, der ein Maß der Absorption des Lichts in der streuenden Matrix ist und/oder eines Streuparameters, der ein Maß der Streuung des Lichts in der streuenden Matrix ist. Die Begriffe "Absorptionsparameter" und "Streuparameter" bezeichnen dabei Größen, die die optische Absorption bzw. die Lichtstreuung unabhängig voneinander beschreiben. In der Praxis wird als Maß der Absorption im allgemeinen $\mu_a$ verwendet, während als Maß der Streuung der modifizierte Streukoeffizient $\mu_s'=\mu_s(1-g)$ verwendet wird, wobei g der Anisotropie-Faktor der Streuung ist.
- Bestimmung der Konzentration einer Substanz in der biologischen Probe. Beispiele von Analyten wurden bereits genannt.

Die Lichttransporteigenschaften einer streuenden Matrix werden in unterschiedlicher Weise von den darin befindlichen Substanzen beeinflußt. Dies gilt nicht nur für die optische Absorption, deren Wellenlängenabhängigkeit üblicherweise für die spektroskopische Analyse verwendet wird. Vielfach werden auch die übrigen Lichttransportparameter, insbesondere der Streukoeffizient und der Brechungsindex von der Konzentration bestimmter Substanzen in der Probe beeinflußt, wobei auch dieses Phänomen wellenlängenabhängig ist. Deswegen bilden optische Analysedaten hinsichtlich der Lichttransportparameter in einer streuenden Matrix eine Basis für die Analyse von darin enthaltenen Substanzen.

Konzentrationsänderungen führen zu charakteristischen Änderungen der Lichttransportparameter, die bei einer oder mehreren Wellenlängen bestimmt und mit der Konzentration der zu analysierenden Substanz korreliert werden können. Dabei kann man so vorgehen, daß man einen oder mehrere der oben genannten Lichttransportparameter explizit bestimmt und mit Hilfe einer Kalibration eine Korrelation zu der gewünschten Analytkonzentration herstellt. Vielfach ist es jedoch zweckmäßig, eine unmittelbare Korrelation zwischen den gemessenen Meßwerten der Meßgröße und der Analytkonzentration (durch Kalibration) herzustellen.

Das Reflexionsverhalten an optischen Grenzflächen ist bekanntlich von dem Verhältnis der Brechungsindices an der reflektierenden Grenzfläche abhängig. Wenn der Brechungsindex $n_a$ außerhalb kleiner ist als der Brechungsindex $n_i$ in der streuenden Matrix, resultiert bei hinreichend flachem Auftreffwinkel Totalreflexion. Biologische Proben haben in der Regel einen Brechungsindex deutlich über 1 (typischerweise bei etwa 1,5). Wenn sich im Außenraum Luft befindet ($n_a = 1$) wird ein großer Prozentsatz der Photonen, die zwischen Einstrahlungsort und Detektionsort an die Grenzfläche gelangen, reflektiert. Diese Reflexion wird vermindert, wenn auf die Grenzfläche eine Substanz mit höherem Brechungsindex, beispielsweise ein Gel, aufgebracht wird, dessen Brechungsindex etwa dem der Matrix entspricht. In diesem Fall treten Photonen, die an die Grenzfläche gelangen, mit hoher Wahrscheinlichkeit in das Gel über. Wenn das Gel (oder eine andere Substanz mit entsprechendem Brechungsindex) dunkel eingefärbt ist, werden die Photonen darin absorbiert, so daß sie nicht in die Matrix zurückgelangen. Eine erste Möglichkeit zur Beeinflussung des Reflexionsverhaltens an der Grenzfläche besteht deshalb darin, bei den beiden Detektionsmessungen die Grenzfläche in dem Zwischenbereich zwischen Einstrahlungsort und Detektionsort mit Substanzen mit unterschiedlichem Brechungsindex zu kontaktieren. Diese Möglichkeit wird nachfolgend als "Brechungsindex-Ausführungsform" bezeichnet.

In der Praxis leichter realisierbar und deswegen bevorzugt ist die Möglichkeit, an der Grenzfläche zwischen Einstrahlungsort und Detektionsort reflektierende Flächen mit unterschiedlichem Reflexionsvermögen anzuordnen. Beispielsweise kann bei einer ersten Detektionsmessung eine optisch stark absorbierende Fläche (als "Kontaktfläche") zwischen dem Einstrahlungsort und dem Detektionsort in Kontakt mit der Grenzfläche der Matrix angeordnet sein, während sich bei einer zweiten Detektionsmessung eine stark reflektierende Kontaktfläche zwischen Einstrahlungsort und Detektionsort befindet ("Kontaktflächen-Ausführungsform"). Unterschiedliche Möglichkeiten zur Realisierung solcher Anordnungen werden anhand der Figuren noch näher beschrieben.

Die Erfindung wird im folgenden anhand der Figuren näher erläutert. Es zeigen:

Fig. 1    ein für die Erfindung geeignetes Gerät in einer schematischen Darstellung teilweise im Schnitt und teilweise als Blockschaltbild;

Fig.2-4   unterschiedliche Ausführungsformen der Probenkontaktplatte eines für die Erfindung geeigneten Meßkopfes;

Fig. 5    eine graphische Darstellung der Abhängigkeit des Quotienten Q der Intensität des Sekundärlichts bei Detektionsmessungen mit zwei unterschiedlichen Reflexionsbedingungen in Abhängigkeit von dem Meßabstand;

Fig. 6    eine graphische Darstellung der fraktionellen Änderung von Q für je 1% Änderung des Absorptionskoeffizienten und des Streukoeffizienten;

Fig. 7    die Änderung von Q in Abhängigkeit von der Änderung des Absorptionskoeffizienten und des Streukoeffizienten für zwei unterschiedliche Meßabstände.

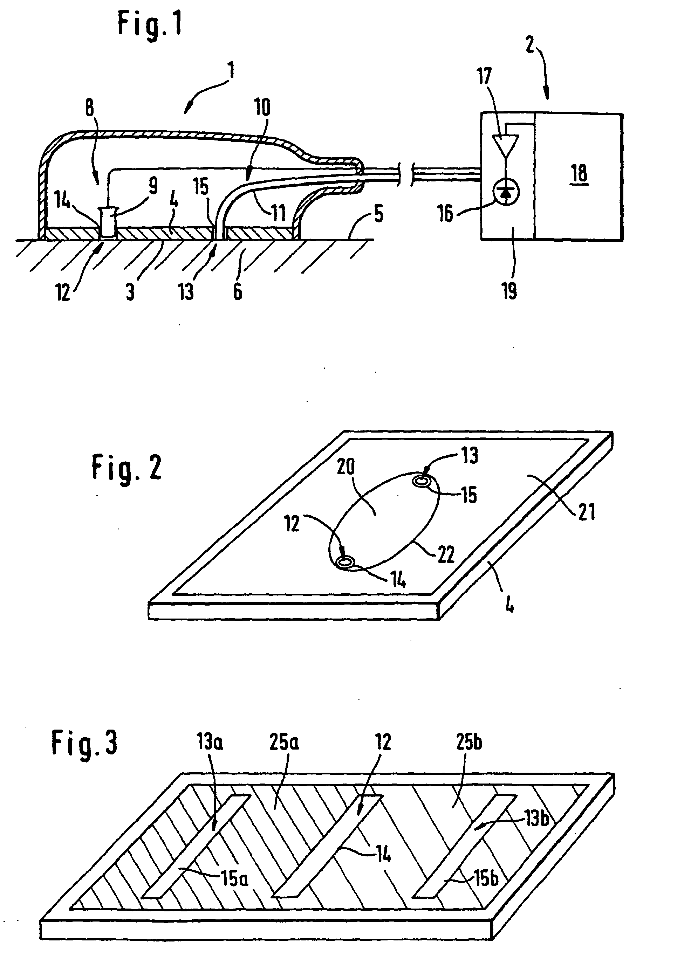

Die in Fig. 1 stark schematisiert dargestellte Vorrichtung für die optische Analyse streuender Matrices besteht im wesentlichen aus einem Meßkopf 1 und einer signalverarbeitungs- und Auswerteeinheit 2.

Der Meßkopf 1 liegt mit der Probenkontaktfläche 3 einer Probenkontaktplatte 4 auf einer Grenzfläche 5 der zu untersuchenden streuenden Matrix 6 auf. Er enthält Lichteinstrahlungsmittel 8, die im dargestellten Fall durch eine in eine Ausnehmung der Probenkontaktplatte 4 eingelassene Leuchtdiode 9 gebildet werden und Licht durch eine (in diesem Fall von der Ausnehmung der Probenkontaktplatte 4 gebildete) Einstrahlungsöffnung 14 der Probenkontaktfläche 3 in die Matrix 6 einstrahlen. Die Detektionsmittel 10 schließen bei der dargestellten Ausführungsform eine Lichtleitfaser 11 ein, die das an einem Detektionsort 13 durch eine Detektionsöffnung 15 der Probenkontaktfläche 3 austretendes Licht detektieren. Das detektierte Licht wird einem in der Signalverarbeitungseinheit 19 der Signalverarbeitungs- und Auswerteeinrichtung 2 angeordneten Photoempfänger 16 (beispielsweise einer Avalanche-Photodiode) zugeführt. Das Ausgangssignal des Photoempfängers 16 wird von einem Verstärker 17 verstärkt und einer Auswerteeinheit 18 zugeführt, in der es - vorzugsweise digital mit Hilfe eines Microcomputers - zu den gewünschten analytischen Daten weiterverarbeitet wird.

In der Auswerteeinheit 18 werden übliche elektronische Verfahren zur genauen und selektiven Erfassung der Meßgröße des Lichtes eingesetzt. Im Falle von Relativmessungen ist die Verwendung von Komparatoren gebräuchlich. Zur Unterdrückung von Störeinflüssen ist die Verwendung von getaktetem oder moduliertem Primärlicht in Verbindung mit einem entsprechenden frequenzselektiven Meßverfahren (Lock-in-Verfahren) vorteilhaft.

Insoweit ist die dargestellte Vorrichtung konventionell aufgebaut und muß deshalb nicht näher erläutert werden. Einzelheiten über mögliche Konstruktionen und unterschiedliche Gestaltungen des Meßkopfes sind dem publizierten Stand der Technik zu entnehmen. Verwiesen sei beispielsweise auf die WO 94/10901, in der mehrere unterschiedliche Anordnungen und Konstruktionen der Lichteinstrahlungsmittel und der Detektionsmittel beschrieben sind. Insbesondere können sowohl die Einstrahlungsmittel als auch die Detektionsmittel in Form von unmittelbar in die Probenkontaktplatte 4 integrierten Lichtsendern bzw. lichtempfindlichen Elementen (wie im vorliegenden Fall der Lichtsender 9) oder mit Hilfe von Lichtleitfasern realisiert sein, die das Licht von einem weiter entfernten Lichtsender zu der Hautkontaktplatte 4 hinführen bzw. (wie im dargestellten Fall) von dem Detektionsort 13 zu einem weiter entfernten Lichtempfänger transportieren.

Ein wesentlicher Unterschied zu den vorbekannten Geräten besteht darin, daß die an der Grenzfläche 5 der Matrix 6 anliegende Probenkontaktfläche 3 mit Mitteln ausgestattet ist, durch die bei mindestens zwei Detektionsmessungen unterschiedliche Reflexionsbedingungen zwischen dem jeweiligen Einstrahlungsort 12 und dem jeweiligen Detektionsort 13 bewirkt werden ("Reflexionseinstellmittel"). Dies kann in unterschiedlichen Ausführungsformen realisiert sein. In den Fig. 2 bis 4 sind Probenkontaktplatten 4 solcher unterschiedlichen Ausführungsformen dargestellt. Entscheidend ist dabei die Gestaltung der mit der Matrix 6 in Kontakt stehenden Probenkontaktfläche 3. Das Bauelement, an dem die Probenkontaktfläche 3 ausgebildet ist, muß nicht notwendigerweise als (flache) Platte ausgebildet sein.

Bei der in Fig. 2 dargestellten Ausführungsform sind die Reflexionseinstellmittel durch eine Probenkontaktfläche 3 mit veränderlichen Reflexionseigenschaften realisiert. Geeignet ist insbesondere ein LCD oder ein ferroelektrisches Display. Diese elektronischen Bauelemente sind insbesondere für Anzeigezwecke kommerziell erhältlich, wobei die Fläche des Display üblicherweise in Teilbereiche unterteilt ist, deren Lichtreflexionseigenschaften durch elektrische Steuersignale geändert werden können. Im Rahmen der Erfindung soll vor allem der in Fig. 2 mit 20 bezeichnete Zwischenbereich zwischen der Einstrahlungsöffnung 14 und der Detektionsöffnung 15 in seinen Reflexionseigenschaften veränderlich sein. Die Form der Teilfläche der Probenkontaktfläche 3, die bei mindestens zwei Detektionsmessungen unterschiedliche Reflexionseigenschaften hat, kann unterschiedlich sein.

Die in Fig. 2 dargestellte Ausführungsform mit einer Probenkontaktfläche 3 mit einstellbaren Reflexionseigenschaften kann auch bei Geräten verwendet werden, bei denen (wie dargestellt) das Licht nur an einem einzigen Einstrahlungsort 12 eingestrahlt und nur an einem einzigen Detektionsort 13 detektiert wird. Die Realisierung verursacht jedoch einen gewissen konstruktiven Aufwand und die Ansteuerung führt zu einem (wenn auch geringen) Energieverbrauch.

Eine Reduzierung dieses Aufwandes ist möglich, wenn bei den mindestens zwei Detektionsmessungen eines Detektionsschrittes das Licht an zwei unterschiedlichen Einstrahlungsorten eingestrahlt und/oder an zwei unterschiedlichen Detektionsorten detektiert wird, so daß zwischen Einstrahlungsort und Detektionsort jeweils unterschiedliche Teilbereiche der Grenzfläche liegen, wobei in den unterschiedlichen Teilbereichen das Reflexionsverhalten der Kontaktfläche verschieden ist.

Eine solche Ausführungsform ist in Fig. 3 dargestellt, wobei in diesem Fall das Licht durch eine Lichteinstrahlungsöffnung 14 eingestrahlt und durch zwei in gleichem Abstand, aber auf gegenüberliegenden Seiten von der Einstrahlungsöffnung 14 angeordneten Detektionsöffnungen 15a und 15b detektiert wird. In diesem Fall ist der Teilbereich der Probenkontaktfläche 3, der zwischen dem Einstrahlungsort 12 und dem Detektionsort 13a bzw. 13b liegt (Zwischenbereich), für die beiden von den Detektionsöffnungen 15a und 15b markierten Detektionsorte 13a und 13b verschieden. Die Zwischenbereiche 25a, 25b weisen stark unterschiedliche Reflexionseigenschaften auf, beispielsweise kann der Zwischenbereich 25a metallisch reflektierend sein, so daß er als nahezu vollständiger Photonenreflektor wirkt, während der Zwischenbereich 25b mattschwarz ist und demzufolge als Photonenfalle wirkt. Bei einer solchen Ausführungsform werden die Reflexionseinstellmittel also durch die hinsichtlich ihres Reflexionsverhaltens unterschiedlichen Teilbereiche der Probenkontaktfläche 3 und die darin entsprechend angeordneten Ausnehmungen an den Einstrahlungs- und Detektionsorten gebildet.

Bei der dargestellten Ausführungsform sind die Einstrahlungsorte und Detektionsorte länglich gestaltet. Dies erlaubt eine gute Ortsauflösung bei relativ hoher Intensität des Lichts, wie in der WO 94/10901 näher erläutert wird. Bei der Erfindung können unterschiedliche Gestaltungen der Detektionsorte und der Einstrahlungsorte verwendet werden, wie sie aus dem vorbekannten Stand der Technik bekannt sind.

Die in Fig. 3 dargestellte Anordnung kann auch insofern abgewandelt werden, als mit mehreren Einstrahlungsorten und einem Detektionsort gearbeitet werden kann. Selbstverständlich ist es auch möglich, mit einer Mehrzahl von Einstrahlungsorten und einer Mehrzahl von Detektionsorten unterschiedliche Lichtwege in unterschiedlichen Teilbereichen der zu untersuchenden Matrix und in unterschiedlichen Raumrichtungen einzustellen, wie ebenfalls in der WO 94/10901 beschrieben wird. Im Rahmen der Erfindung wesentlich ist jedoch, daß in jedem Fall mehrere Detektionsmessungen mit unterschiedlichen Reflexionsbedingungen zwischen dem jeweiligen Einstrahlungsort und dem jeweiligen Detektionsort, jedoch vorzugsweise bei gleichem Meßabstand, möglich sein müssen.

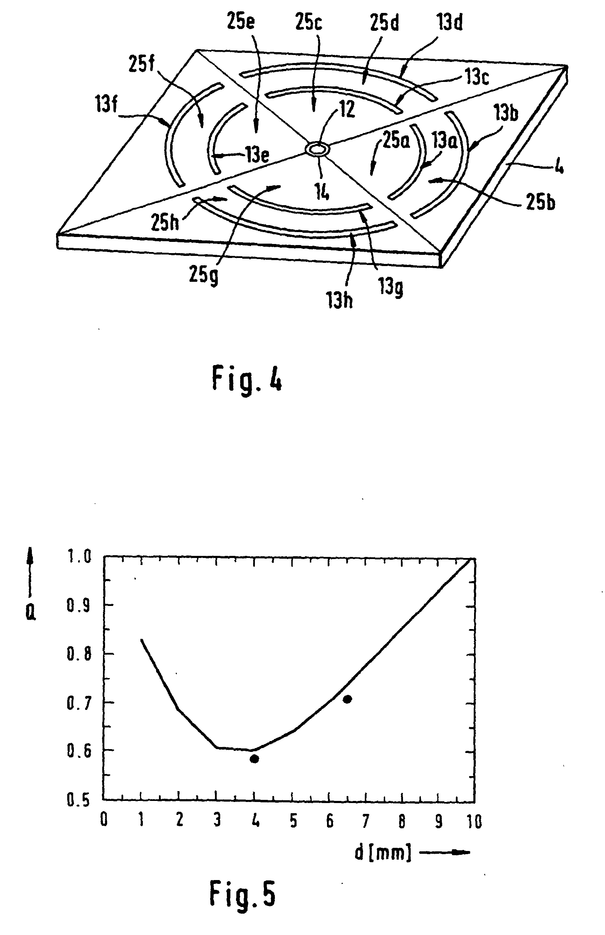

Fig.4 zeigt eine Variante mit einem Einstrahlungsort 12 und jeweils zwei unterschiedliche Detektionsorte 13a,b; 13c,d; 13e,f und 13g,h. Bei dieser Ausführungsform können in vier Raumrichtungen jeweils zwei unterschiedliche Meßabstände zwischen dem Einstrahlungsort und dem jeweiligen Detektionsort eingestellt werden. Die Zwischenbereiche weisen auch hier unterschiedliche Reflexionseigenschaften auf, wobei bevorzugt gegenüberliegende Zwischenbereiche (z.B. 25a, 25e und 25c, 25g) gleiche Reflexionseigenschaften haben.

Figur 5 zeigt experimentelle Ergebnisse, die an einem Experimentalmodell einer streuenden Matrix gewonnen wurden, dessen optische Eigenschaften etwa denen des menschlichen Hautgewebes entsprechen. Es bestand aus einem Quader mit den Dimensionen 8 cm x 8 cm x 20 cm, einem Absorptionsindex $\mu_a$ = 0,02 mm$^{-1}$, einem modifizierten Streuindex $\mu_s$' = 0,9 mm$^{-1}$ und einem Brechungsindex im Innern der Matrix $n_i$ = 1,56 bei einer Lichtwellenlänge L = 780 nm. Zum Einstrahlen und zum Detektieren von Licht an der Grenzfläche des Experimentalmodelles wurden zwei optische Fasern mit einem Kerndurchmesser von 100 μm verwendet, die in festen Meßabständen d = 4 mm und d = 6,5 mm positioniert wurden.

Die Reflexionseigenschaften in dem Zwischenbereich zwischen Einstrahlungsort und Detektionsort wurden durch Veränderung des Brechungsindex $n_a$ variiert. Eine erste Serie von Messungen wurde mit Luft ($n_a$ = 1) im Außenraum an der Grenzfläche zwischen dem Einstrahlungsort und dem Detektionsort durchgeführt. Bei einer zweiten Serie von Detektionsmessungen wurde die Grenzfläche mit einem Gel mit einem Brechungsindex von $n_a$ = 1,46 bedeckt, dem eine schwarze Farbe beigemischt war, um praktisch das gesamte in das Gel eingedrungene Licht zu absorbieren.

Das Brechungsindexverhältnis $n_s$ = $n_i/n_a$ bestimmt in bekannter Weise die Reflexionseigenschaften an der Grenzfläche, die in der Fachsprache auch als Grenzflächenbedingungen (boundary conditions) bezeichnet werden. Bei den beschriebenen experimentellen Bedingungen lassen sich zwei unterschiedliche Grenzflächenbedingungen $n_{s1}$ = 1,56 und $n_{s2}$ = 1,07 einstellen. Nachfolgend wird die Bezeichnung $n_s$ für die Reflexionseigenschaften (Grenzflächenbedingungen) in dem Zwischenbereich zwischen Einstrahlungsort und Detektionsort generell verwendet, also unabhängig davon, ob die unterschiedlichen Reflexionsbedingungen (wie bei dem beschriebenen Experimentalmodell) durch die Brechungsindex-Ausführungsform oder wie bei den Figuren 2 bis 4 durch die Kontaktflächen-Ausführungsform realisiert sind.

In der Grafik von Figur 5 ist auf der Ordinate der Quotient Q der Intensität I des Sekundärlichtes bei Detektionsmessungen mit zwei unterschiedlichen Grenzflächenbedingungen $n_s$ aufgetragen:

$$Q(n_{s1},n_{s2}) = I(n_{s1})/I(n_{s2})$$

Diese Meßgröße ist in ihrer Abhängigkeit von dem Meßabstand d dargestellt, wobei die experimentellen Ergebnisse als Punkte markiert sind.

Die durchgezogene Kurve repräsentiert Berechnungen mit Hilfe der Diffusionstheorie (Gleichung (18) des oben erwähnten Artikels von T. J. Farrell et al.) Auf Basis der dort beschriebenen Abhängigkeit der diffusen Reflexion von dem Meßabstand d bei gegebenen optischen Bedingungen $R(d)|\mu_a,\mu_s',n_s$ ergibt sich

$$Q(d)|\mu_a,\mu_s',n_{s1},n_{s2} = \frac{R(d)\,|\mu_a,\,\mu_s',\,n_{s1}}{R(d)\,|\mu_a,\,\mu_s',\,n_{s2}}$$

Es zeigt sich eine erstaunlich gute Übereinstimmung zwischen Experiment und Theorie, wobei zu betonen ist, daß keinerlei Normierung vorgenommen wurde. Es wurden lediglich die experimentellen Punkte um einen Faktor F = 2,43 korrigiert, um die Tatsache zu berücksichtigen, daß an der Kontaktfläche der Lichtleitfasern mit der Grenzfläche kein Gel aufgetragen wurde und daher in diesem Teil der Grenzfläche auch keine Änderung des Brechungsindex stattfindet, während in der Theorie von Farell ein über die gesamte Grenzfläche gleichförmiger Brechungsindex angenommen wird. Der Faktor F = $S(n_{s1})/S(n_{s2})$ ergibt sich aus dem durch $n_{s1}$ und $n_{s2}$ bestimmten Verhältnis der Segmente S der Matrix, aus denen Licht austreten und von der Detektorfaser aufgefangen werden kann:

$$S(n_s) \approx 3 - 2\cos\theta - \cos^2\theta,$$

wobei $\theta = \sin^{-1}(1/n_s)$ ist.

Die Lichttransportparameter und damit zusammenhängende andere optische Analysedaten lassen sich auf Basis der hier gegebenen Erläuterungen und der dargestellten experimentellen Ergebnisse auf verschiedenerlei Weise ermitteln.

Vorzugsweise wird in dem Auswerteschritt zunächst eine Relation Q von Intensitätsmeßwerten bei den mindestens zwei Detektionsmessungen mit unterschiedlichen Reflexionsbedingungen gebildet. Wenn man Q, wie in Figur 5 dargestellt, in Abhängigkeit von dem Meßabstand d für mehrere Meßabstände bestimmt, können die Koeffizienten $\mu_a$ und $\mu_s'$ durch Anfitten der erwähnten diffusionstheoretischen Gleichungen an die experimentellen Ergebnisse getrennt bestimmt werden. Alternativ besteht die Möglichkeit, für einen Meßabstand d eine Mehrzahl von Relationen $Q_i$ für unterschiedliche $n_{si}$ zu messen. Auch auf diesem Weg ist eine Trennung von $\mu_a$ und $\mu_s'$ möglich. Allgemein werden vorzugsweise mindestens zwei Detektionsmessungen mit unterschiedlichen Grenzflächenbedingungen $n_{si}$ bei jeweils mindestens zwei Meßabständen $d_i$ durchgeführt.

Wie bereits erwähnt, kann der Algorithmus zur Bestimmung der gesuchten analytischen Daten auf Basis der in dem Detektionsschritt gemessenen Meßgröße jedoch auch rein empirischer Natur sein. In der Analysetechnik werden in neuerer Zeit zunehmend numerische Korrelationsverfahren verwendet, um auf Basis einer Kalibration mit Proben, für die die zu analysierenden Daten bekannt sind, eine Korrelation zwischen den Meßgrößen (Eingangsvariablen) und den gesuchten Analysedaten (Ausgangsvariablen) zu bilden. Hierzu gehören iterative Methoden zur optimalen Beschreibung der Relation von Eingangsvariablen und Ausgangsvariablen sowie multilineare und nichtlineare Algorithmen. Auch neuronale Netze werden zu diesem Zweck verwendet.

Auch bei der vorliegenden Erfindung kann der Fachmann auf Basis der hier gegebenen Erläuterungen solche numerischen Methoden einsetzen, wobei nicht notwendigerweise eine Relation Q gebildet werden muß. Vielmehr können auch in Abhängigkeit von den Grenzflächenbedingungen gemessene Meßwerte $I(n_s)$ $|d_i$ der Meßgröße unmittelbar als Eingangsvariable eines Auswertealgorithmus verwendet werden. Dies kann für einen Meßabstand d oder für mehrere Meßabstände $d_i$ erfolgen. Im Falle von nur einem Meßabstand d werden vorzugsweise mindestens drei Werte von I für drei unterschiedliche Werte von $n_s$ gemessen.

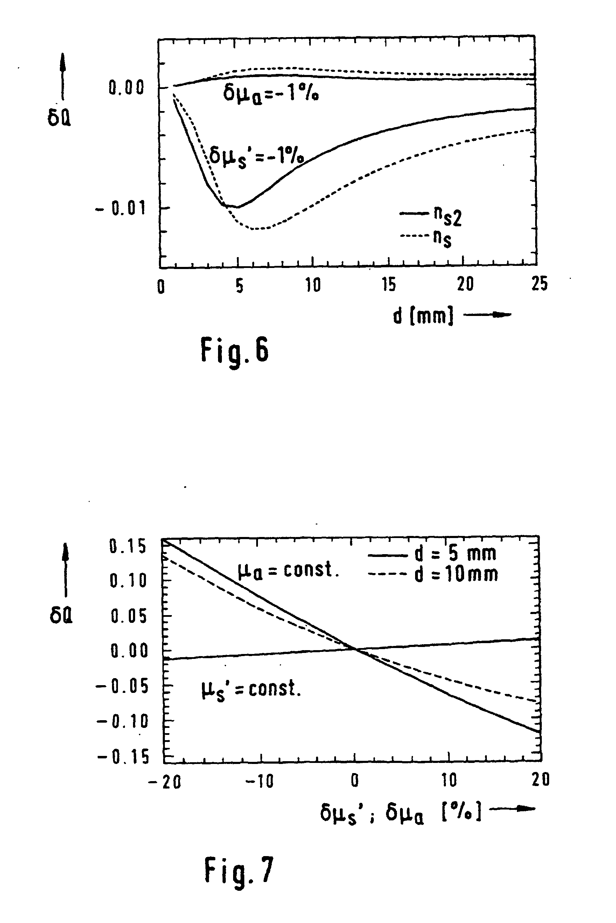

Figur 6 zeigt eine graphische Darstellung der fraktionellen Änderung δQ (fractional change) von Q für eine einprozentige Änderung des Absorptionskoeffizienten und des Streukoeffizienten. Die Kurven wurden auf Basis der erwähnten Gleichung der Diffusionstheorie berechnet, wobei für die optischen Eigenschaften $\mu_a = 0{,}01$ mm$^{-1}$ und $\mu_s' = 1$ mm$^{-1}$ angenommen wurden. Es wurden drei unterschiedliche Werte $n_s = 1{,}0$; $1{,}4$ und $1{,}6$ für die Grenzflächenbedingungen verwendet.

In Figur 6 ist die Änderung δQ $(\mu_a,\mu_s')$ pro fraktionelle Änderung $\delta\mu_a = -1\%$ bzw. $\delta\mu_s' = -1\%$ in Abhängigkeit von dem Abstand d dargestellt. Man sieht, daß Q eine sehr viel stärkere Abhängigkeit von dem modifizierten Streukoeffizienten $\mu_s'$ als von dem Absorptionskoeffizienten $\mu_a$ zeigt. Vor allem in dem mittleren Bereich der Meßabstände zwischen etwa 2 mm und etwa 12 bis 15 mm ist die Empfindlichkeit der Meßmethode für Änderungen des Streukoeffizienten besonders hoch, d.h. der Streukoeffizient kann in diesem bevorzugten Meßabstandsbereich mit besonders guter Genauigkeit bestimmt werden.

Aufgrund dieser Ergebnisse ist davon auszugehen, daß sich die vorliegende Erfindung in besonderem Maße zur quantitativen Analyse der optischen Streueigenschaften von biologischen Proben und anderen streuenden Matrices eignet. Gemäß der WO 94/10901 sind die Streueigenschaften der Vielfachstreuung von Licht in solchen Proben in erstaunlich starkem Ausmaß von der Konzentration von Glucose in der Probe abhängig. Die vorliegende Erfindung ist daher in besonderem Maße zur Analyse von Glucose unter Verwendung der in der WO 94/10901 erläuterten Prinzipien geeignet.

Um einen besseren Vergleich der Abhängigkeit von Q von Änderungen der Streuung und Absorption zu ermöglichen, wurde Q als Funktion von $\mu_s'$ und $\mu_a$ für einen Meßabstand d = 5 mm und d = 10 mm berechnet. Diese Abhängigkeit ist (für $n_{s2} = 1{,}4$, $n_{s1} = 1{,}0$) in einem Variationsbereich von $\mu_s'$ und $\mu_a$ von ± 20 % in Figur 7 dargestellt. Die Änderung in Abhängigkeit von $\mu_s'$ ist zehn bis fünfzehn Mal so hoch wie die Änderung in Abhängigkeit von der Absorption. Dabei ist bemerkenswert, daß für die beiden erwähnten Meßabstände die Abhängigkeit weitgehend übereinstimmt.

## Patentansprüche

1. Verfahren zur Bestimmung von analytischen Daten über das Innere einer streuenden Matrix (6), insbesondere einer biologischen Probe, bei welchem

   in einem Detektionsschritt Detektionsmessungen durchgeführt werden, bei denen Licht durch eine die streuende Matrix (6) begrenzende Grenzfläche (5) als Primärlicht an einem Einstrahlungsort (12) in die Matrix (6) eingestrahlt und aus der streuenden Matrix (6) durch die Grenzfläche (5) an einem Detektionsort (13) in einem vorbestimmten Meßabstand von dem Einstrahlungsort (12) austretendes Licht als Sekundärlicht detektiert wird, um eine durch die Wechselwirkung des Lichts mit der streuenden Matrix (6) veränderliche, meßbare physikalische Eigenschaft des Lichtes als Meßgröße zu bestimmen, die ein Maß für die zu bestimmenden analytischen Daten ist, und

   in einem Auswerteschritt die analytischen Daten auf Basis eines in dem Detektionsschritt gemessenen Meßwertes der Meßgröße ermittelt werden,

**dadurch gekennzeichnet, daß**
in dem Detektionsschritt mindestens zwei Detektionsmessungen mit unterschiedlichen Reflexionsbedingungen an der Grenzfläche (5) zwischen dem Einstrahlungsort (12) und dem Detektionsort (13) durchgeführt werden, bei denen jeweils ein Meßwert der Meßgröße bestimmt wird.

2. Verfahren nach Anspruch 1, **dadurch gekennzeichnet, daß** die Meßgröße die Intensität des Sekundärlichts ist.

3. Verfahren nach Anspruch 1 oder 2, **dadurch gekennzeichnet, daß** in dem Auswerteschritt eine Relation von Meßwerten bei den mindestens zwei Detektionsmessungen mit unterschiedlichen Reflexionsbedingungen gebildet wird.

4. Verfahren nach einem der vorhergehenden Ansprüche, **dadurch gekennzeichnet, daß** mehrere Detektionsmessungen mit unterschiedlichen Meßabständen zwischen Einstrahlungsort und Detektionsort durchgeführt werden.

5. Verfahren nach einem der vorhergehenden Ansprüche, **dadurch gekennzeichnet, daß** mindestens zwei Detektionsmessungen mit gleichem Meßabstand aber unterschiedlichen Reflexionsbedingungen zwischen Einstrahlungsort und Detektionsort durchgeführt werden.

6. Verfahren nach einem der vorhergehenden Ansprüche, **dadurch gekennzeichnet, daß** bei den mindestens zwei Detektionsmessungen mit unterschiedlichen Reflexionsbedingungen unterschiedlich reflektierende Reflexionsflächen an der Grenzfläche zwischen dem jeweiligen Einstrahlungsort und dem jeweiligen Detektionsort an der Grenzfläche der streuenden Matrix angeordnet sind.

7. Verfahren nach Anspruch 6, **dadurch gekennzeichnet, daß** die unterschiedlichen Reflexionsbedingungen durch Veränderung der Reflexionseigenschaften der Reflexionsfläche eingestellt werden.

8. Verfahren nach Anspruch 6 oder 7, **dadurch gekennzeichnet, daß** bei den mindestens zwei Detektionsmessungen mit unterschiedlichen Reflexionsbedingungen mindestens der Einstrahlungsort oder der Detektionsort verschieden ist, so daß zwischen Einstrahlungsort und Detektionsort jeweils unterschiedliche Teilbereiche der Grenzfläche liegen, wobei in den Teilbereichen unterschiedliche Reflexionsbedingungen vorliegen.

9. Verfahren nach einem der vorhergehenden Ansprüche, **dadurch gekennzeichnet, daß** die analytischen Daten einen Absorptionsparameter, der ein Maß der Absorption des Lichts in der streuenden Matrix ist und/oder einen Streuparameter, der ein Maß der Streuung des Lichts in der streuenden Matrix ist, einschließen.

10. Verfahren nach einem der vorhergehenden Ansprüche, wobei die streuende Matrix eine biologische Probe ist, **dadurch gekennzeichnet, daß** die analytischen Daten die Konzentration eines Analyten in der biologischen Probe einschließen.

11. Verfahren nach Anspruch 9 und 10, **dadurch gekennzeichnet, daß** die Konzentration des Analyten unter Berücksichtigung des Absorptionsparameters und/oder des Streuparameters bestimmt wird.

12. Verfahren nach Anspruch 10 oder 11, **dadurch gekennzeichnet, daß** die biologische Probe ein biologisches Gewebe, insbesondere Hautgewebe oder subkutanes Fettgewebe oder das Gewebe der Skleren ist.

13. Vorrichtung zur Durchführung des Verfahrens nach einem der vorhergehenden Ansprüche, mit einem Meßkopf (1) mit einer Probenkontaktfläche (3) zum Anlegen an eine Grenzfläche (5) der streuenden Matrix (6),
einer Meßeinrichtung (1,19) zur Bestimmung der Intensität des Sekundärlichtes in dem Detektionsschritt mit

- Lichteinstrahlungsmitteln (8) mit einem Lichtsender (9) zum Einstrahlen von Primärlicht in die streuende Matrix (6) an dem Einstrahlungsort (12) durch eine Einstrahlungsöffnung (14) der Probenkontaktfläche (3) und die Grenzfläche (5) und

- Detektionsmitteln (10) mit einem Lichtempfänger (16) zum Detektieren von an dem Detektionsort (13) durch die Grenzfläche (5) und eine Detektionsöffnung (15) der Probenkontaktfläche (4) aus der streuenden Matrix (6) austretendem Sekundärlicht und

Auswertemitteln (18) zur Ermittlung der analytischen Daten auf Basis der in dem Detektionsschritt gemessenen Meßwerte,
**dadurch gekennzeichnet, daß**
die Probenkontaktfläche (3) Mittel aufweist, durch die bei mindestens zwei Detektionsmessungen unterschiedliche Reflexionsbedingungen in dem Zwischenbereich zwischen dem jeweiligen Einstrahlungsort (12) und dem jeweiligen Detektionsort (13) einstellbar sind.

14. Vorrichtung nach Anspruch 13, **dadurch gekenn-**

zeichnet, daß die Reflexionseinstellungsmittel durch eine Probenkontaktfläche (3) mit veränderlichen Reflexionseigenschaften gebildet werden.

15. Vorrichtung nach Anspruch 14, **dadurch gekennzeichnet, daß** die Reflexionsfläche von der Oberfläche eines LCD gebildet wird.

16. Vorrichtung nach einem der Ansprüche 13 bis 15, **dadurch gekennzeichnet, daß** in der Probenkontaktfläche (3) mindestens zwei Einstrahlungsöffnungen (14) oder mindestens zwei Detektionsöffnungen (15) angeordnet sind, so daß unterschiedliche Teilbereiche (25a, 25b) der Grenzfläche zwischen jeweils einer Einstrahlungsöffnung (14) und einer Detektionsöffnung (15a bzw. 15b) liegen und daß die Probenkontaktfläche (3) in den unterschiedlichen Teilbereichen ein unterschiedlich hohes Reflexionsvermögen aufweist.

## Claims

1. Method for determining analytical data concerning the inside of a scattering matrix (6), in particular of a biological sample, in which
in a detection step detection measurements are carried out in which light is irradiated into the matrix (6) as primary light at an irradiation site (12) through an interface (5) bounding the scattering matrix (6) and light emerging from the scattering matrix (6) through the interface (5) is detected as secondary light at a detection site (13) at a predetermined measuring distance from the irradiation site (12), in order to determine as a measurement variable a measurable physical property of the light which varies due to the interaction of the light with the scattering matrix (6), which measurement variable is a measure of the analytical data to be determined, and
in an evaluation step the analytical data are determined on the basis of a measurement value of the measurement variable which is measured in the detection step,
**characterized in that**
in the detection step at least two detection measurements are carried out with different reflection conditions at the interface (5) between the irradiation site (12) and the detection site (13), in each of which a measurement value of the measurement variable is determined.

2. Method according to claim 1, **characterized in that** the measurement variable is the intensity of the secondary light.

3. Method according to claim 1 or 2, **characterized in that** in the evaluation step a ratio of measurement values is formed during the at least two detection measurements with different reflection conditions.

4. Method according to any one of the preceding claims, **characterized in that** a plurality of detection measurements are carried out with different measuring distances between irradiation site and detection site.

5. Method according to any one of the preceding claims, **characterized in that** at least two detection measurements with the same measuring distance but different reflection conditions are carried out between irradiation site and detection site.

6. Method according to any one of the preceding claims, **characterized in that**, in the at least two detection measurements with different reflection conditions, reflective surfaces having a different reflectivity are arranged at the interface between the respective irradiation site and the respective detection site at the interface of the scattering matrix.

7. Method according to claim 6, **characterized in that** the different reflection conditions are provided by variation of the reflectivity properties of the reflective surface.

8. Method according to claim 6 or 7, **characterized in that** in the at least two detection measurements with different reflection conditions, at least the irradiation site or the detection site is different, so that different sections of the interface lie between irradiation site and detection site, wherein different reflection conditions are present in the sections.

9. Method according to any one of the preceding claims, **characterized in that** the analytical data include an absorption parameter which is a measure of the absorption of the light in the scattering matrix and/or a scattering parameter which is a measure of the scattering of the light in the scattering matrix.

10. Method according to any one of the preceding claims, wherein the scattering matrix is a biological sample, **characterized in that** the analytical data include the concentration of an analyte in the biological sample.

11. Method according to claims 9 and 10, **characterized in that** the concentration of the analyte is determined by taking into account the absorption parameter and/or the scattering parameter.

12. Method according to claim 10 or 11, **characterized in that** the biological sample is a biological tissue, in particular skin tissue or subcutaneous fatty tissue or the tissue of the sclerae.

**13.** Apparatus for carrying out the method according to any one of the preceding claims, with a measuring head (1) with a sample contact surface (3) for resting against an interface (5) of the scattering matrix (6), a measuring means (1, 19) for determining the intensity of the secondary light in the detection step with

- light irradiation means (8) with a light transmitter (9) for irradiating primary light into the scattering matrix (6) at the detection site (12) through an irradiation opening (14) in the sample contact surface (3) and the interface (5) and

- detection means (10) with a light receiver (16) for detecting secondary light emerging from the scattering matrix (6) at the detection site (13) through the interface (5) and a detection opening (15) in the sample contact surface (4) and

- evaluation means (18) for determining the analytical data on the basis of the measurement values measured in the detection step,

**characterized in that**
the sample contact surface (3) comprises means by means of which, in at least two detection measurements, different reflection conditions can be set in the intermediate area between the respective irradiation site (12) and the respective detection site (13).

**14.** Apparatus according to claim 13, **characterized in that** the reflection adjustment means are formed by a sample contact surface (3) with variable reflectivity properties.

**15.** Apparatus according to claim 14, **characterized in that** the reflection surface is formed by the surface of an LCD.

**16.** Apparatus according to any one of claims 13 to 15, **characterized in that** at least two irradiation openings (14) or at least two detection openings (15) are arranged in the sample contact surface (3), so that different sections (25a, 25b) of the interface lie between an irradiation opening (14) and a detection opening (15a or 15b) and that the sample contact surface (3) has a reflectivity of differing value in the different sections.

**Revendications**

**1.** Procédé de détermination de données analytiques concernant l'intérieur d'un milieu diffusant (6), en particulier d'un échantillon biologique, dans lequel sont effectuées, dans une étape de détection, des mesures de détection pour lesquelles de la lumière est rayonnée en tant que lumière primaire à un endroit de rayonnement entrant (12) dans le milieu (6) à travers une surface limite (5) limitant le milieu diffusant (6) et de la lumière sortant du milieu diffusant (6) en passant par la surface limite (5) à un endroit de détection (13) à une distance de mesure prédéterminée de l'endroit du rayonnement entrant (12) est détectée en tant que lumière secondaire pour déterminer, en tant que grandeur de mesure constituant une mesure pour les données analytiques à déterminer, une propriété physique mesurable de la lumière et variable en raison de l'interaction de la lumière et du milieu diffusant (6) et dans lequel les données analytiques sont déterminées dans une étape d'analyse sur la base d'une valeur mesurée de la grandeur de mesure, mesurée à l'étape de détection,
**caractérisé en ce que**
dans l'étape de détection sont effectuées au moins deux mesures de détection avec différentes conditions de réflexion à la surface limite (5) entre l'endroit du rayonnement entrant (12) et l'endroit de détection (13), pour chacune desquelles est déterminée une valeur mesurée de la grandeur de mesure.

**2.** Procédé selon la revendication 1, **caractérisé en ce que** la grandeur de mesure est l'intensité de la lumière secondaire.

**3.** Procédé selon la revendication 1 ou 2, **caractérisé en ce qu'**est établie, dans l'étape d'analyse, une relation de valeurs mesurées pour les au moins deux mesures de détection effectuées avec différentes conditions de réflexion.

**4.** Procédé selon l'une des revendications précédentes, **caractérisé en ce qu'**une pluralité de mesures de détection est effectuée avec différentes distances de mesure entre l'endroit du rayonnement entrant et l'endroit de détection.

**5.** Procédé selon l'une des revendications précédentes, **caractérisé en ce qu'**au moins deux mesures de détection sont effectuées avec une même distance de mesure, mais des conditions de réflexion différentes, entre l'endroit du rayonnement entrant et l'endroit de détection.

**6.** Procédé selon l'une des revendications précédentes, **caractérisé en ce que**, pour les au moins deux mesures de détection effectuées avec des conditions de réflexion différentes, des surfaces de réflexion réfléchissant différemment sont placées au niveau de la surface limite entre chaque endroit de rayonnement entrant et chaque endroit de détection au niveau de la surface limite du milieu diffusant.

**7.** Procédé selon la revendication 6, **caractérisé en ce que** les différentes conditions de réflexion sont réglées par modification des propriétés de réflexion de la surface réfléchissante.

**8.** Procédé selon la revendication 6 ou 7, **caractérisé en ce que**, pour les au moins deux mesures de détection effectuées avec des conditions de réflexion différentes, au moins l'endroit du rayonnement entrant ou l'endroit de détection est différent de sorte qu'entre l'endroit du rayonnement entrant et l'endroit de détection se trouvent dans chaque cas différentes zones partielles de la surface limite, différentes conditions de réflexion étant données dans les zones partielles.

**9.** Procédé selon l'une des revendications précédentes, **caractérisé en ce que** les données analytiques incluent un paramètre d'absorption constituant une mesure de l'absorption de la lumière dans le milieu diffusant et/ou un paramètre de diffusion constituant une mesure de la diffusion de la lumière dans le milieu diffusant.

**10.** Procédé selon l'une des revendications précédentes, le milieu diffusant étant un échantillon biologique, **caractérisé en ce que** les données analytiques incluent la concentration d'un analyte dans l'échantillon biologique.

**11.** Procédé selon les revendications 9 et 10, **caractérisé en ce que** la concentration de l'analyte est déterminée compte tenu du paramètre d'absorption et/ou du paramètre de diffusion.

**12.** Procédé selon la revendication 10 ou 11, **caractérisé en ce que** l'échantillon biologique est un tissu biologique, et plus particulièrement un tissu cutané ou un tissu graisseux sous-cutané ou le tissu des sclères.

**13.** Dispositif pour l'exécution du procédé selon l'une des revendications précédentes, comprenant une tête de mesure (1) avec une surface de contact (3) avec l'échantillon pour application sur une surface limite (5) du milieu diffusant (6), un dispositif de mesure (1, 19) pour déterminer l'intensité de la lumière secondaire dans l'étape de détection avec

- des moyens (8) de rayonnement de la lumière avec un émetteur de lumière (9) pour rayonner de la lumière primaire entrant dans le milieu diffusant (6) à l'endroit du rayonnement entrant (12) par un orifice de rayonnement entrant (14) de la surface de contact (3) avec l'échantillon et par la surface limite (5) et

- des moyens de détection (10) avec un récepteur de lumière (16) pour détecter de la lumière secondaire sortant du milieu diffusant (6) à l'endroit de détection (13) en traversant la surface limite (5) et en passant par un orifice de détection (15) de la surface de contact (4) avec l'échantillon et

avec des moyens d'analyse (18) pour déterminer les données analytiques sur la base des valeurs mesurées qui ont été mesurées à l'étape de détection,
**caractérisé en ce que**
la surface de contact (3) avec l'échantillon présente des moyens permettant de régler, pour au moins deux mesures de détection, des conditions de réflexion différentes dans la zone intermédiaire comprise entre chaque endroit de rayonnement entrant (12) et chaque endroit de détection (13).

**14.** Dispositif selon la revendication 13, **caractérisé en ce que** les moyens de réglage de la réflexion sont constitués par une surface de contact (3) avec l'échantillon avec des propriétés de réflexion variables.

**15.** Dispositif selon la revendication 14, **caractérisé en ce que** la surface réfléchissante est constituée par la surface d'un LCD.

**16.** Dispositif selon l'une des revendications 13 à 15, **caractérisé en ce qu'**au moins deux orifices de rayonnement entrant (14) ou au moins deux orifices de détection (15) sont aménagés dans la surface de contact (3) avec l'échantillon de sorte que différentes zones partielles (25a, 25b) de la surface limite se trouvent chacune entre un orifice de rayonnement entrant (14) et un orifice de détection (15a resp. 15b) et **en ce que** la surface de contact (3) avec l'échantillon présente, dans les différentes zones partielles, un pouvoir de réflexion différemment élevé.

# Fig.1

# Fig. 2

# Fig.3

Fig. 4

Fig.5

**Fig. 6**

**Fig. 7**